Europäisches Patentamt

European Patent Office

Office européen des brevets

(19)

(11) Numéro de publication: **0 247 075**
**B1**

(12) **FASCICULE DE BREVET EUROPEEN**

(45) Date de publication du fascicule du brevet: 03.10.90

(51) Int. Cl.⁵: **H 04 N 7/133, H 04 N 7/137**

(21) Numéro de dépôt: 86906348.7

(22) Date de dépôt: 20.10.86

(86) Numéro de dépôt international:
PCT/FR86/00362

(87) Numéro de publication internationale:
WO 87/02854 07.05.87 Gazette 87/10

(54) PROCEDE DE CODAGE HYBRIDE PAR TRANSFORMATION POUR LA TRANSMISSION DE SIGNAUX D'IMAGE.

(30) Priorité: 22.10.85 FR 8515649

(43) Date de publication de la demande:
02.12.87 Bulletin 87/49

(45) Mention de la délivrance du brevet:
03.10.90 Bulletin 90/40

(84) Etats contractants désignés:
DE GB NL

(56) Documents cités:
GB-A-2 102 652
US-A-4 546 386

IEEE Transactions on Communications, vol.
COM-25, no. 11, November 1977, IEEE New York
(US) Ali Habibi: "Survey of adaptive image
coding techniques", pages 1275-1284

(73) Titulaire: EUDE, Gérard
26, allée Jean Bart
F-77200 Torcy (FR)

(72) Inventeur: EUDE, Gérard
26, allée Jean Bart
F-77200 Torcy (FR)

(74) Mandataire: Mongrédien, André et al
c/o BREVATOME 25, rue de Ponthieu
F-75008 Paris (FR)

Courier Press, Leamington Spa, England.

# EP 0 247 075 B1

**Description**

La présente invention a pour objet un procédé de codage hybride par transformation pour la transmission de signaux d'image. Cette invention concerne le traitement en temps réel de signaux d'information de type séquentiel, tels que les signaux vidéo, dans le but de comprimer le volume de données nécessaires pour représenter cette image afin de la transmettre avec un débit binaire minimum sur un ligne de transmission. Le procédé de l'invention s'applique notamment en télévision, en visioconférence ou en visiophonie. Il peut être également appliqué aux images à variations lentes, tel qu'en télésurveillance.

Dans les dernières années, de nombreux procédés ont été proposés pour comprimer un signal d'image afin de réduire le débit nécessaire à la transmission numérique de cette image. Ce souci est né du désir de limiter le débit numérique afin de pouvoir transmettre des signaux vidéo sur une ligne à bas débit ou d'en transmettre plusieurs simultanément sur une ligne.

De manière générale, le signal vidéo est d'abord converti en un signal numérique qui est ensuite comprimé en plusieurs étapes. Une première compression du signal vidéo est obtenue par sous-échantillonnage du signal de luminance numérisé et des signaux de chrominances numérisés, par exemple pour une application de visioconférence à 384 kbit/s, ce premier traitement peut permettre d'obtenir un taux de compression de l'ordre de 10 à 15. Le débit correspondant à une image conforme à la recommandation 601 du CCIR est ainsi ramené de 166 Mbit/s à 11,7 Mbit/s. La deuxième étape de compression est une étape de transformation de l'image dans le domaine fréquentiel, suivie d'un codage intratrame ou intertrame des coefficients de l'image transformée. La troisième étape est un codage statistique, en général de type Huffmann, du signal séquentiel constitué par les coefficients transformés et codés.

Le procédé de l'invention concerne la deuxième étape et a pour objectif une compression plus importante du signal d'image en maintenant une qualité d'image convenable.

De manière générale, pour réaliser la deuxième étape de codage, l'image est divisée un une pluralité de blocs identiques. Chacun de ces blocs est codé séparément soit par un codage intertrame, soit par un codage intratrame. Le codage intertrame consiste à coder la différence entre les coefficients d'un bloc d'une trame d'une image et les coefficients du bloc correspondant de la trame de l'image précédente; le codage intratrame consiste en un codage direct des coefficients du bloc. En mode inter-trame, les différences peuvent porter sur des blocs dans le domaine spatial, les blocs représentant alors une partie de l'image, ou sur des blocs dans le domaine fréquentiel, les blocs étant obtenus par transformation des blocs d'image et représentant les composantes fréquentielles de cette image.

La transformée peut être une transformée en cosinus, une transformée de FOURIER, de HADAMARD, de Haar ou autre. Les coefficients du bloc transformé sont appelés coefficients fréquentiels en général, ou coefficients séquentiels pour la transformée de Hadamard. Les coefficients du bloc transformé ne réprésentent pas exactement les composantes fréquentielles de l'image correspondant au bloc non transformé. Cependant, par abus de langage, on appellera domaine fréquentiel le domaine du bloc transformé.

Un système de compression d'image employant un codage intertrame des blocs est décrit dans la demande de brevet européen EP—A—0084270. Dans ce système connu, les blocs correspondants de deux trames successives sont comparés puis, si la différence entre les deux blocs est supérieure à un seuil déterminé, le bloc est converti dans le domaine fréquentiel par une transformée en cosinus discrète avant d'être codé par un codage statistique.

On connaît également par la demande de brevet européen EP—A—0123456 un système de codage employant de manière combinée les modes intratrame et intertrame. Ce système utilise des facteurs de prédiction variables pour tenir compte du fait que la corrélation entre les coefficients transformés correspondant d'une trame à une autre est en général variable et non linéaire. Ce système élimine les données redondantes entre les blocs d'une même trame du domaine spatial et entre les blocs correspondants de trames consécutives dans le domaine fréquentiel.

Dans les systèmes connus de codage, et notamment dans les systèmes décrits dans les deux demandes de brevet citées, le choix du mode de codage d'un bloc, intertrame ou intratrame, ou éventuellfment le nonrafraîchissement du bloc (si le bloc courant est identique au bloc correspondant de la trame précédente) est déterminé par un critère de décision a priori. Par exemple, dans la demande de brevet européen EP—A—0084270, on compare un bloc avec le bloc correspondant de la trame précédente et on décide de faire un codage intertrame si cette différence est supérieure à un seuil prédédeterminé. Dans le cas contraire, on décide de ne pas refraîchir le bloc. Dans la demande de brevet européen EP—A—0123456, le codage utilise simultanément les modes intertrame et intratrame. Ce codage utilise différents ensembles fixés a priori de facteurs de prédiction en fonction des différences intertrame de blocs correspondants. La décision de codage est donc limitée au choix de l'un de ces ensembles de facteurs de prédiction.

Ces critères de décision ne sont pas pleinement satisfaisant car ils limitent le choix du mode de codage à une ou plusieurs alternatives fixées a priori. Ils ne permettant dans pas de prendre en compte de manière optimale la structure de chaque bloc à coder.

L'invention s'écarte de ces solutions connues en proposant de réaliser une décision a posteriori, c'est-

2

à-dire après avoir évalué le volume de données nécessaires pour la transmission d'un bloc selon les modes de codage intratrame et intertrame. A la différence des systèmes de codage selon l'art antérieur, dans lesquels on décide à priori, et sur des critères subjectifs, du mode de codage d'un bloc, le procédé de codage de l'invention consiste à coder effectivement un bloc suivant chacun des deux modes de codage, intertrame et intratrame, et à décider ensuite du mode de codage. Cette décision peut par exemple reposer sur un critère de minimisation du débit nécessaire instantané pour une qualité d'image donnée.

De manière précise, l'invention à pour objet un procédé de codage hybride par transformation pour réduire le volume de données nécessaires pour représenter des images, dans lequel les images sont définies par une suite de trames, chaque trame contenant un ensemble de blocs organisés en matrices, chaque bloc contenant un ensemble de données numériques organisées en matrice et représentant une partie de l'image, le procédé comprenant les étapes successives suivantes:

transformation de chaque bloc de données numériques et un bloc de coefficients transformés représentant ledit bloc dans le domaine fréquentiel,

quantification des coefficients transformés de chaque bloc pour obtenir des coefficients transformés quantifiés ayant chacun une valeur prise dans un ensemble limité de valeurs prédéterminées,

balayage de chaque bloc de coefficients transformés quantifiés pour produire une suite de coefficients transformés quantifiés et évaluation du volume de données nécessaires pour coder ladite suite par un codage statistique,

calcul d'un bloc de coefficients de différences par une différence entre un bloc de coefficients transformés quantifiés et le bloc correspondant de la trame précédente, balayage du bloc de coefficients de différences pour produire une suite de coefficients de différences, et évaluation du volume de données nécessaire pour coder ladite suite de coefficients de différences par ledit codage statistique,

comparaison des volumes de données nécessaires pour coder un bloc, et décision du mode de codage en fonction desdits volumes de données et du volume maximal autorisé par le débit sur les lignes de transmission,

codage statistique du bloc, suivant le mode décidé, par ledit code statistique.

Dans ce procédé, on évalue en parallèle le volume numérique du code correspondant au codage statistique du bloc courant (codage intratrame) et le volume numérique du code correspondant au codage statistique de la différence entre le bloc courant et le bloc correspondant de la trame précédente (codage intertrame). Ces évaluations sont faites respectivement en analysant le nombre et la position des transitions dans la suite de coefficients transformés quantifiés et dans la suite de coefficients de différence. Ces évaluations ne requirèment que des opérations mathématiques simples, en général des additions, et peuvent donc être obtenues très rapidement. Le codage statistique effectif est réalisé ensuite, après la prise de décision du mode de codage.

L'expérience montre que si, en général, deux images successives ne sont pas identiques, un nombre important de blocs peuvent ne pas subir de modification d'une trame à la trame suivante. C'est en particulier le cas des images visiophoniques ou des images délivrées par des systèmes de télésurveillance. Il est dans ce cas inutile de transmettre les blocs non modifiés d'une image puisqu'ils ont déjà été transmis avec l'image précédente.

De manière avantageuse, le procédé de l'invention comporte une étape supplémentaire de détection de mouvement, réalisée après l'étape de transformation ou après l'étape de quantification, cette étape de détection de mouvement consistant en une comparaison d'un bloc transformé d'une trame avec le bloc transformé correspondant de la trame précédente et, dans le cas où les deux blocs sont identiques ou très proches, à émettre sur la ligne de transmission un code de non rafraîchissement du bloc.

On considère que les deux blocs sont très proches par exemple si la somme des carrés de la différence de leurs coefficients est inférieure à un seuil donné. Ce seuil peut être fixe ou déterminé dynamiquement en fonction du débit instantané sur la ligne de transmission.

Cette ètape de détection de mouvement est défini par un critère de décision a priori. Le procédé de l'invention peut également comprendre un critère de décision a posteriori de détection de mouvement dans l'image.

De manière préférée, le critère de détection de mouvement a posteriori est pris en compte au cours de l'étape de décision, cette étape définissant un non refraîchissement du bloc traité si les volumes de données nécessaires pour les codages intertrame et intratrame sont inférieurs à un seuil prédéterminé.

En effet, si les volumes de données nécessaires pour coder le bloc traité suivant le mode intertrame et suivant le mode intratrame sont inférieurs à un volume prédéterminé, ceci signifie que le bloc traité est peu différent du bloc correspondant de la trame précédente. On estime alors, en deça d'un certain seuil qui constitue le seuil prédéterminé, que le peu de mouvement détecté dans le bloc ne justifie pas la quantité de bits nécessaires à son rafraîchissement.

Il est clair que le critère de détection de mouvement a priori et que le critère de détection de mouvement a posteriori sont indépendants. Le procédé selon l'invention peut donc ne prendre en compte aucun de ces deux critères, prendre en compte un seul de ces deux critères ou les deux simultanément.

En résumé, la caractéristique essentielle du procédé de l'invention est une décision a posteriori du mode de codage d'un bloc parmi le mode de codage intertrame, le mode de codage intratrame, et éventuellement le mode de non rafraîchissement. Le procédé peut également être avantageusement complété par un critère de détection de mouvement à priori. La décision a posteriori du mode de codage permet, par rapport au procédé et système de l'art antérieur, une meilleure optimisation (minimisation) du débit de données instantané nécessaires pour transmettre un bloc avec une qualité donnée.

Si, d'une part, la possibilité de choisir entre plusieurs modes de codage et, d'autre part, le critère utilisé pour déterminer ce choix sont des paramètres essentiels du taux de compression que l'on désire atteindre, et ont, à cet égard, fait l'objet d'un nombre important de publications, l'étape de balayage qui consiste à transformer un bloc bidimensionnel en une suite séquentielle de données n'est en général pas optimisée.

On sait que les éléments d'un bloc transformé sont les composantes fréquentielles de la portion d'image représentée par le bloc non transformé. Dans un bloc transformé de taille $N \times N$ où les coefficients ont des indices compris entre 0 et $N-1$, le coefficient de coordonnées (0,0) représente la composante continue et les autres coefficients les composantes alternatives, les composantes de basses fréquences correspondant aux coefficients de faibles indices et les composants de hautes fréquences aux coefficients d'indices élevés. On sait, par expérience, que ce bloc transformé comporte un nombre important de coefficients nuls, particulièrement pour les composantes de hautes fréquences. Ces coefficients nuls n'apportent pas d'informations signifiantes, au sens où ils ne contribuent pas à la reconstruction énergétique de l'image après la transmission. Il est donc inutile de les coder et de les transmettre.

Dans la plupart des solutions présentées dans l'art antérieur, le bloc transformé est lu par un balayage en zigzag, c'est-à-dire que le bloc bidimensionnel est transformé en une suite de coefficients dans l'ordre des indices suivants: (0,0), (0,1), (1,0), (2,0), (1,1), (0,2), (0,3), (1,2),...; cette suite se terminant par le dernier coefficient non nul du bloc transformé.

Ce balayage unique a pour inconvénient majeur de ne pas tenir compte de la structure du bloc, c'est-à-dire de la localisation des coefficients significatifs les plus importants. Ainsi, par exemple, lorsque le bloc transformé comprend des coefficients non nuls essentiellement sur une ligne, le balayage en zigzag crée une suite comprenant un nombre important de coefficients nuls.

Un objectif du procédé de l'invention est d'améliorer cette étape de balayage de manière à produire une suite de coefficients, représentant le bloc transformé, ayant un nombre minimum de valeurs nulles. Pour atteindre ce but, on définit plusieurs classes de blocs correspondant chacune à une structure fréquentielle déterminée, et on associe à chaque classe un balayage adapté à cette classe. Chaque classe est définie comme une zone unique ou une réunion de plusieurs zones d'un ensemble de zones constituant une partition du bloc.

Les caractéristiques et avantages de l'invention ressortiront mieux de la description qui va suivre donnée à titre illustratif, mais non limitatif, en référence aux dessins annexés, sur lesquels:

la figure 1 est un schéma synoptique d'un système de transmission comprenant un système de codage conforme à l'invention,

la figure 2 est un dessin schématique d'un dispositif de prétraitement recevant un signal vidéo composé d'un signal analogique de luminance Y et de deux signaux analogiques de chrominance dB, dR, ledit dispositif réalisant une compression desdits signaux et délivrant un signal numérique bidimensionnel de luminance et deux signaux numériques bidimensionnels de chrominance,

la figure 3 illustre un mode de réalisation du moyen de filtrate temporel récursif du dispositif de prétraitement,

la figure 4 est une représentation schématique d'un système de codage selon l'invention,

les figures 5a et 5b illustrent des balayages d'un bloc transformé,

la figure 6 illustre, dans le cas où le procédé inclut plusieurs classes de bloc, un dispositif pour déterminer la classe d'appartenance d'un bloc,

la figure 7 représente un organigramme de l'algorithme du moyen de décision du dispositif de la figure précédente,

la figure 8 est un organigramme de l'algorithme du choix entre le mode de codage intratrame et le mode de codage intertrame, ce choix étant effectué, conformément au procédé de l'invention, a posteriori en compartant les volumes de données obtenues par codage statistique du bloc transformé en mode intertrame et du bloc transformé en mode intratrame,

la figure 9 est un schéma synoptique d'un système de décodage correspondant au système de codage de la figure 4.

Pour illustrer le procédé de l'invention on choisit à titre d'exemple, le cas du codage d'un signal de type visiophone que l'on désire transmettre sur une ligne à base débit de 64 kbits/s. Il est bien entendu que cet exemple est uniquement illustratif et ne constitue pas une limitation de l'invention.

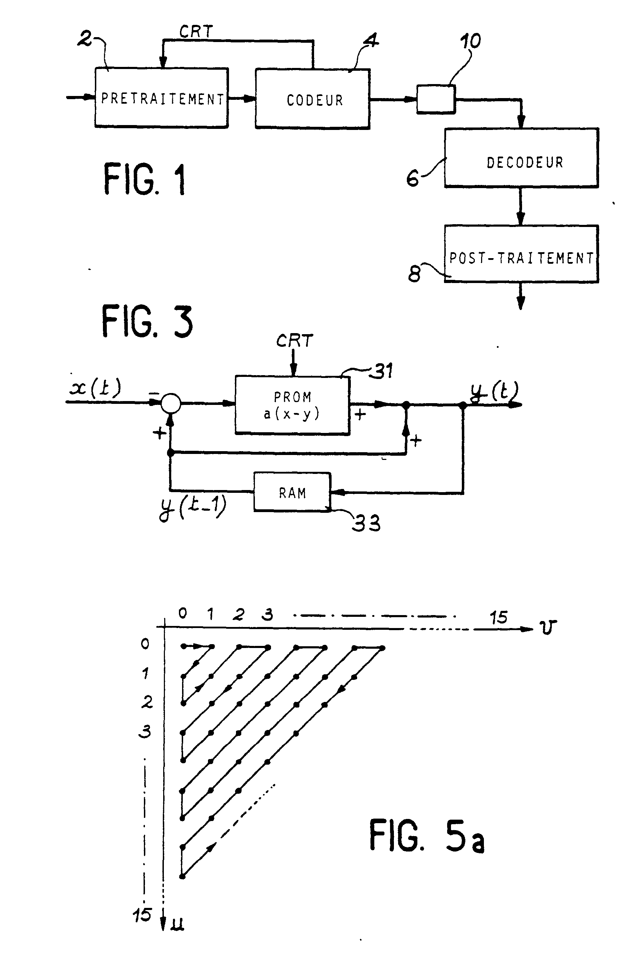

On a représenté sur la figure 1 un système de transmission de signaux d'image comprenant un système de codage conforme à l'invention. Ce système se compose, pour la partie émission, d'un dispositif de prétraitement 2 et d'un système de codage 4 et, pour la partie réception, d'un système de décodage 6 et d'un moyen de post-traitement 8. La liaison entre le système de codage 4 et le système de décodage 6 est assurée par une ligne de transmission 10. Le moyen de prétraitement 2 reçoit un signal vidéo analogique qui se présente par exemqle sous la forme d'une composante analogique de luminance Y et d'une composante analogique de chrominance constituée de deux signaux dB, dR, de différences de couleurs multiplexes. Le moyen de prétraitement peut également recevoir directement les signaux R, V, B délivrés par la caméra. Les signaux reçus sont traités, de manière classique, afin de rendre leurs caractéristiques compatibles avec les capacités de compression du système de codage 4. Ce traitement, qui sera décrit en

4

## EP 0 247 075 B1

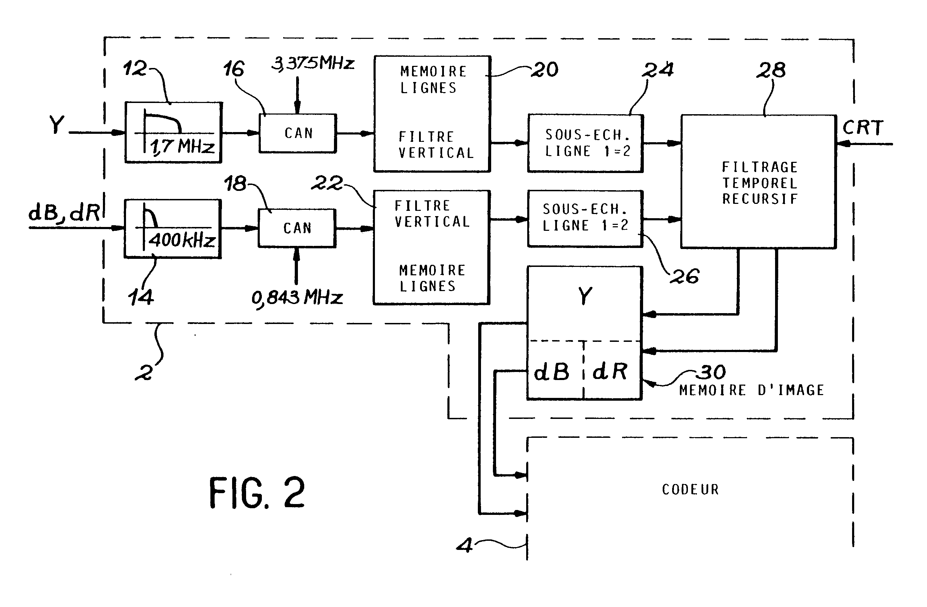

détail en référence à la figure 2, comprend notamment une numérisation des composantes analogiques et un sous-échantillonage de ces signaux.

Le système de codage 4 est l'élément essentiel du système de transmission de la figure 1. Il met en oeuvre le procédé de l'invention pour découper chaque image en plusieurs blocs et pour décider, selon un critère de décision a posteriori, du mode de codage intratrame ou intertrame. Le système de codage peut également inclure des moyens de détection de mouvement d'image dans des blocs correspondants de deux trames successives et utiliser un critère de décision a priori et/ou un critère de décision a posteriori pour transmettre sur la ligne de transmission 10 un code de non refraîchissement du bloc traité.

Lorsque le mode de codage d'un bloc est décidé, par le critère de décision a posteriori du procédé de l'invention, ce bloc est codé, de manière classique, par un code à longueur variable dit code statistique, tel qu'un code de HUFFMANN. Les codes ainsi créés sont combinés à des codes de service dans des trames qui sont émises sur la ligne de transmission 10.

A la réception, le système de décodage 6 réalise sur la trame reçue une opération inverse à celle effectuée par le système de codage 4. Il délivre au dispositif de post-tratement 8 des signaux numériques de luminance et de chrominance qui sont, dans le meilleur des cas, identiques aux signaux délivrés par le dispositif de prétraitement 2 au système de codage 4. Le dispositif de post-traitement 8 opère sur les données reçues du système de décodage 6 des traitements tels que sur-échantillonnage et conversion analogique-numérique pour restituer le signal vidéo initial.

La figure 2 est un dessin schématique du dispositif de prétraitement 2 de la figure 1 pour l'application choisie de transmission d'un signal de visiophonie sur une ligne à 64 kbit/s. Ce dispositif ne fait pas partie de l'invention. Il a une structure classique bien connue de l'homme de l'art.

Le dispositif de prétraitement 2 comporte en entrée un filtre passe-bas 12 et un filtre passe-bas 14 pour recevoir respectivement le signal analogique de luminance Y et le signal analogique multiplexé de différences de couleurs comprenant les composantes de chrominance dB et dR. Ces filtres passe-bas ont une fréquence de coupure respective de 1,7 MHz et de 400 KHz à 3dB.

Les signaux délivrés par ces filtres sont reçus chacun dans un convertisseur analogique-numérique 16, 18. Le signal de luminance délivré par le filtre passe-bas 12 est échantillonné à la fréquence de 3,375 MHz et quantifié linéairement sur 8 bits par le convertisseur analogique-numérique 16. De même, le signal de chrominance délivré par le filtre passe-bas 14 est échantillonné à la fréquence de 0,843 MHz et quantifié linéairement sur 8 bits par le convertisseur analogique-numérique 18.

Chacun des signaux délivrés par les convertisseurs analogique-numérique est ensuite traité par un filtre numérique vertical 20, 22 afin de réduire la bande passante verticale. Cette opération de filtrage nécessite des mémoires de ligne qui sont incluses dans les filtres. Le filtrage est réalisé sur trois lignes consécutives avec les coefficients suivants: 1/4, 1/2 et 1/4.

Les signaux délivrés par les filtres 20 et 22 sont sous-échantillonnés dans un rapport 2 respectivement par des moyens 24 et 26. Les signaux de luminance et de chrominance sous-échantillonnés sont ensuite appliqués sur des entrées d'un filtre temporel récursif 28. Ce dernier réalise un sous-échantillonnage temporel de manière à adapter la fréquence image aux caractéristiques du codeur. Ce filtre permet également de réduire le bruit temporel de la source, qui est très important lorsque les conditions d'éclairement ne sont pas optimales ou lorsque les caméras ne sont pas de bonne qualité. Ce filtre assure aussi une régulation de l'entropie afin de ne pas transmettre d'information inutile au codeur. Cette régulation est commandée par un signal CRT issu du codeur et qui est fonction du débit binaire instantané sur la ligne de transmission.

Une équation possible pour ce filtre temporel récursif est:

$$y(k,l,t) = a \cdot x(k,l,t) + (1-a) \cdot y(k,l,t-1)$$

où

x(k,l,t) est le point d'image de coordonnés (k,l) de la trame t,

y(k,l,t−1) est le point d'image filtré de coordonnées (k,l) de la trame t−1,

a est un coefficients dépendant de la différence (x(k,l,t)−y(k,l,t−1)).

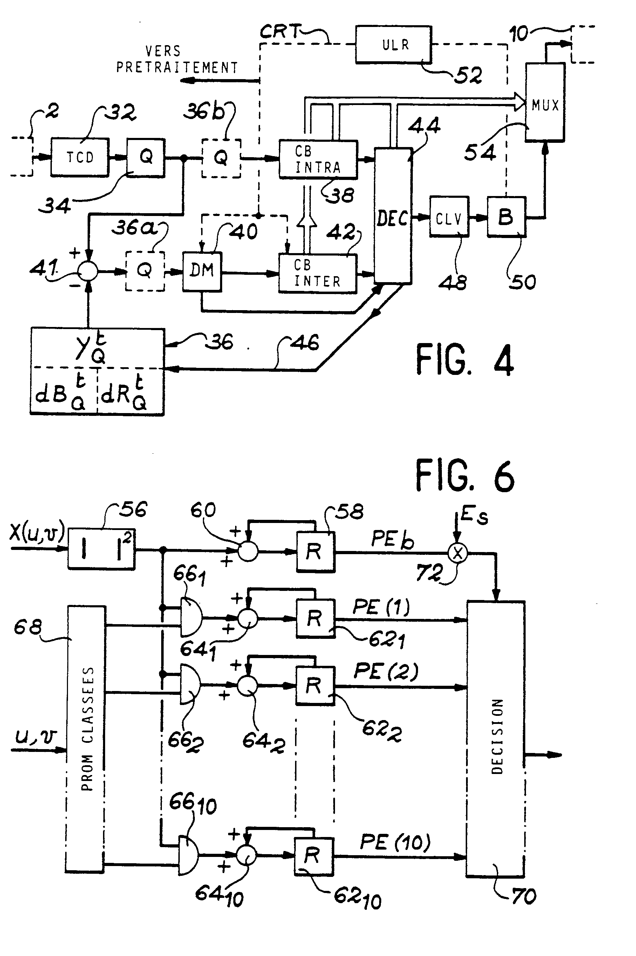

Un mode de réalisation de ce filtre a été représenté schématiquement sur la figure 3. Il comprend essentiellement une mémoire morte 31, par exemple de type PROM, contenant dans la cellule d'indice x(t)−y(t−1) la donnée a · (x−y). Ce filtre comporte également une mémoire d'image 33 pour mémoriser la trame filtrée précédent la trame courante. Après le filtrage des signaux de luminance et de chrominance par le filtre temporel récursif 28, le signal d'image a les caractéristiques suivantes:

| Nombre de points/ligne | : | 180(Y) | 45(dB) | 45(dR) |
|---|---|---|---|---|
| Nombre de lignes/trame | : | 144(Y) | 38(dB) | 38(dR) |
| Nombre de trames/s. | : | 6,25(Y) | 6,25(dB) | 6,25(dR) |
| Nombre de bits/point | : | 8(Y) | 8(dB) | 8(dR) |
| Débit binaire | | 1,467 Mbit/s | | |

EP 0 247 075 B1

Cette image est mémorisée dans une mémoire d'image 30 constituant un tampon de sortie du dispositif de prétraitement.

On a représenté schématiquement sur la figure 4 un système de codage hybride pour la mise en oeuvre du procédé de codage de l'invention. Ce système de codage reçoit les images délivrées par le dispositif de prétraitement. Chaque image se présente sous la forme de trois matrices de données: une matrice de données de luminance Y, une matrice de données de différence de couleurs dB et une matrice de données de différence de couleurs dR. Le codeur peut traiter ces trois ensembles de manière indépendante ou non. L'ensemble de données de luminance et les ensembles de données de chrominance sont traités soit en parallèle, soit séquentiellement selon l'architecture du système de codage.

De manière classique, les ensembles de données de luminance et de chrominance représentant une image sont divisés en blocs. Pour la luminance, ces blocs ont par exemple une taille de 16×16, et pour la chrominance de 8×8. De manière générale, la taille des blocs résulte d'un compromis entre le facteur de compression désiré et les contraintes de réalisation du système de codage.

L'élément d'entrée du système de codage est un moyen de transformation 32 pour transformer chaque bloc reçu en un bloc de coefficients transformés. Ce bloc transformé représente la structure fréquentielle de la portion d'image correspondant au bloc. Par exemple, la transformation d'image mise en oeuvre par le moyen de transformation 32 est une transformation discrète en cosinus paire. Cette transformation est connue de l'homme de l'art: elle est définie de la manière suivante:

$$X(u,v) = \Sigma \; \Sigma \; x(k,l) \cdot A(k,u) \cdot A(l,v)$$
$$0 \leqslant k \leqslant N-1$$
$$0 \leqslant l \leqslant N-1$$

$$\text{avec } A(k,u) = \sqrt{2/N} \cdot C(u) \cdot \cos(\pi u(2k+1)/2N)$$

$$\text{et } C(u) = 1/2 \text{ si } u=0 \text{ et } C(u)=1 \text{ si } u \neq 0.$$

Dans cette expression, x(k,l) représente le coefficient de coordonnées (k,l) dans le bloc non transformé et X(u,v) le coefficient de coordonnées (u,v) dans le bloc transformé. N×N est la taille du bloc.

La transformation peut être séparée pour le calcul en deux étapes: une étape de calcul de la transformée en cosinus discrète sur les lignes du bloc, puis une étape de calcul de la transformée en cosinus discrète sur les colonnes du bloc. Avec un débit du signal source qui est de 1,467 Mbits/s, dans l'exemple choisi, le calcul de ces transformations peut être fait à l'aide de deux processssurs de traitement de signal, par exemple du type TMS 320 10 de TEXAS Instrument.

La transformée en cosinus discrète possède trois propriétés fondamentales:

conservation de l'énergie (théorème de PARSEVAL),

les points de forte amplitude sont statistiquement concentrés sur les coefficients de basses fréquences, c'est-à-dire sur les coefficients du bloc transformé ayant des indices u et v faibles,

la probabilité d'avoir des amplitudes significatives sur les coefficients de hautes fréquences (u et v élevés) est très faible.

Ces propriétés sont essentielles pour le codage des coefficients de la transformée. Ainsi, dans la plupart des blocs transformés, peu de coefficients sont réllement utiles à la reconstruction de l'image, et donc peut de points seront transmis. La difficulté principale réside dans les moyens d'adresser les quelques coefficients de hautes fréquences significatifs dans le domaine transformé, car le débit à atteindre sur la ligne de transmission ne permet pas l'utilisation de nombreux bits d'adressage.

Après la transformation des blocs par le moyen 32, une partie de la compression est atteinte par la quantification des blocs transformés. Celle-ci est réalisée par un quantificateur 34, de préférence immédiatement après la transformation. Elle est alors extérieure à la boucle de codage intertrame. Cependant, la quantification peut également être réalisée par un quantificateur 36a situé dans la boucle de codage intertrame. Ce quantificateur reçoit alors en entrée la différence entre le bloc courant et le bloc correspondant de la trame précédente. Pour le codage intratrame, la quantification est réalisée par un quantificateur 36b fonctionnant de manière semblable au quantificateur 34 avec des seuils qui peuvent être différents. Les quantificateurs 36a et 36b peuvent être adaptatifs et servir de moyens de régulation du débit sur la ligne de transmission.

La composante continue, c'est-à-dire le coefficient transformé de coordonnées u=0 et v=0, est quantifiée avec un pas uniforme. Les composantes alternatives sont quantifiées avec un pas non uniforme. Par exemple, sept quantificateurs différents peuvent être utilisés pour les données de luminance et cinq pour les données de chrominance. Le tableau I, joint en annexe, donne un exemple de table d'assignation des quantificateurs. Les valeurs nulles de cette table représentent les coefficients transformés non transmis. Ceux-ci sont uniquement des composantes de hautes fréquences dont on sait, par les propriétés de la transformée en cosinus discrète, que la probabilité qu'ils aient une amplitude non négligeable est faible.

Dans le cas où le quantificateur est à l'extérieur de la boucle de codage, les niveaux de quantification peuvent être, par exemple, déterminés par un algorithme de minimisation de l'erreur quadratique ou de façon pragmatique et subjective par des essais successifs. Ces niveaux de quantification $X_Q$ peuvent être définis de la manière suivante:

$$\text{Si } QD(n-1) < X(u,v) \leqslant QD(n)$$
$$\text{alors } X_Q(u,v) = (QD(n) + QD(n-1))/2$$
$$\text{avec } QD(n) = T + nG + f(n)A$$
$$\text{et } f(n) = (n-2)(n-1)/2 \, (n>2)$$

où $QD(n)$ (n entier) sont des seuils de décision,

T est un seuil en deçà duquel le coefficient $X(u,v)$
n'est pas significatif $n \cdot G + f(n)$. A définit le pas de quantification.

Les coefficients quantifiés des blocs de luminance et de chrominance transformés d'une même trame sont mémorisés dans une mémoire de trame transformée 36. Cette mémoire est utilisée en mode de codage intertrame pour calculer la différence entre un bloc transformé de la trame courante et le bloc transformé correspondant de la trame précédente, qui est mémorisé dans la mémoire 36. Au lieu de mémoriser dans cette mémoire les niveaux de quantification, on peut mémoriser simplement les indices de ces niveaux. Ceci permet de diminuer le taille requise pour mémoriser une trame transformée.

Les étapes de transformation des blocs dans le domaine fréquentiel et de quantification de ces blocs transformés sont des étapes classiques des procédés de codage d'image. L'originalité du procédé de codage de l'invention réside dans le critère de décision utilisé pour coder chaque bloc transformé avant de les appliquer sur la ligne de transmission. Rappelons que ce critère de décision est un critère a posteriori fondé sur le volume de données à transmettre par unité d'énergie, c'est-à-dire le rapport entre le nombre de bits du code transmis par rapport à la quantité d'informations contenues dans le bloc transformé.

Cette étape du procédé de codage est mise en oeuvre dans le système de codage de la figure 4 par les éléments suivants:

un moyen de traitement intratrame 38 dont l'entrée est reliée à la sortie du moyen de quantification 34 (ou 36b),

un moyen de détection de mouvement 40 dont l'entrée reçoit d'un soustracteur 41 la différence entre un bloc délivré par le moyen de quantification 34 et les coefficients quantifiés du bloc correspondant de la trame précédente mémorisée dans la mémoire 36, (lorsque la quantification est faite dans la boucle de codage, le quantificateur 36a est inséré entre le soustracteur 41 et le moyen de détection de mouvement 40, et l'entrée positive du soustracteur 41 est reliée à la sortie du moyen 32),

un moyen de traitement intertrame 42 dont l'entrée est reliée à la sortie du moyen de détection de mouvement 40,

et une unité de décision 44 décidant du mode de codage de chaque bloc en fonction de signaux délivrés par les moyens de traitement 38, 42 et par le moyen de détection de mouvement 40.

L'unité de décision 44 commande également l'adressage de la mémoire 36 par une voie 46. En effet, lorsque le moyen de détection 40 indique que le bloc transformé courant est identique au bloc correspondant de la trame précédente, il n'y a pas lieu de refraîchir à nouveau ce bloc transformé courant puisqu'il est déjà contenu dans la mémoire 36.

L'unité de décision 44 est munie de moyens de reconstruction pour, en mode intertrame, ajouter le bloc délivré par le moyen 42 au bloc correspondant contenu dans la mémoire 36.

L'unité de décision 44 est suivie d'un codeur statistique 48 mettant en oeuvre, de manière classique, un code à longueur variable (CLV) pour coder le bloc transformé (cas du codage intratrame) où la différence entre le bloc transformé courant et le bloc correspondant à la trame précédente (cas du codage intertrame).

Le code délivré par ce codeur 48 est envoyé dans un tampon 50 dont le remplissage est géré par une unité logique de régulation 52. Cette unité commande, en fonction de l'état du tampon 50, des paramètres des moyens de détection du mouvement 40 et de traitement 38, 42, afin que le tampon 50 ne soit jamais complètement vide ni complètement plein. Les codes contenus dans le tampon 50 sont ensuite multiplexées avec des codes de service émis par les moyens de traitement 38, 42 et par l'unité de décision 44. Ce multiplexage est assuré par un multiplexeur 54 dont la sortie constitue l'entrée de la ligne de transmission.

Le moyen de détection de mouvement 40 est classique. Il consiste à analyser le bloc résultant de la différence entre le bloc transformé courant délivré par le moyen de quantification 34 et le bloc correspondant de la trame précédente délivrée par la mémoire 36.

Le bloc est déclaré fixe, et la mémoire n'est pas modifiée si:

$$|D(0,0)|^2 < TD \text{ et } \left( \sum_{\substack{u,v \\ (u,v) \neq (0,0)}} |D(u,v)|^2 \right) < TA$$

où TD et TA sont des seuils fixés par l'unité logique de régulation 52 en fonction de l'état de remplissage du tampon 50. $D(u,v)$ est la différence entre les coefficients $X(u,v)$ du bloc courant et du bloc correspondant de la trame précédente.

Dans ce cas, il n'est pas nécessaire de transmettre le bloc transformé courant puisqu'il a déjà été émis sur la ligne de transmission. Il suffit d'émettre sur cette ligne un code de service indiquant que le bloc n'est pas modifié. Ce code est émis par l'unité de décision 44 vers le multiplexeur 54.

Lorsque le bloc n'est pas fixe, il convient de chercher quel est le meilleur codage entre le mode intertrame et le mode intratrame. Pour ce faire, conformément à l'invention, le bloc transformé est analysé par le moyen de traitement 38 pour évaluer le nombre de bits nécessaires au codage de ce bloc en mode intratrame, et il est analysé, en parallèle, par le moyen de traitement 42 pour évaluer le nombre de bits nécessaires au codage en mode intertrame. Les moyens de traitement 38 et 42 fonctionnent de manière semblable; la seule différence réside en ce que le moyen de traitement 38 traite un bloc transformé et le moyen de traitement 42 un bloc résultant de la différence entre deux blocs transformés.

Chaquue moyen de traitement comporte de manière connue deux étages de calcul: un premier étage de balayage pour passer de la structure bidimensionnelle du bloc à une structure linéaire composée d'une suite de coefficients, et un étage de calcul pour évaluer la longueur du code, ou nombre de bits, produit par le codeur statistique 48 pour coder cette suite.

La balayage du bloc transformé peut être réalisé, comme dans les systèmes de codage connus, par un balayage dit en zigzag. Si on note $X(u,v)$ le coefficient de coordonnées $u,v$ dans le bloc transformé, le balayage en zigzag du bloc transformé produit la suite $X(0,0)$, $X(0,1)$, $X(1,0)$, $X(2,0)$, $X(1,1)$, $X(0,2)$, $X(0,3)$, $X(1,2)$,...

Ce codage, qui peut être utilisé dans le procédé de l'invention, n'est pas pleinement satisfaisant car il ne tient pas compte de la structure du bloc, c'est-à-diore de la localisation des coefficients les plus importants. Ainsi, pour un bloc présentant principalement des coefficients non nuls sur la première ligne, le balayage en zigzag produit une suite comprenant un nombre important de coefficients nuls. Ceci n'est pas intéressant car ces coefficients nuls, qui n'apportent aucune information pour la reconstruction de l'image, seront pris en compte par le codeur statistique au augmenteront inutilement le volume du code produit par ce dernier.

Pour remédier à cet inconvénient, on se propose d'utiliser plusieurs balayages adaptés chacun aux caractéristiques des blocs. Pour cela, on définit a priori un ensemble de classes pour représenter différentes structures possibles d'un bloc, et on associe à chaque classe un balayage particulier. Les classes sont définies comme une réunion de zones, ces zones constituant une partition du bloc. La partition du bloc en plusieurs zones est réalisée de façon subjective. Le tableau II joint en annexe donne un exemple d'une telle partition; la zone $Zi$ ou $1 \leqslant i \leqslant 8$, est composée de l'ensemble des éléments notés i dans le tableau.

Les classes sont par exemple au nombre de 10 et peuvent être définies à partir des zones de la manière suivante:

$$C1 = Z$$
$$C2 = Z1 \cup Z2$$
$$C3 = Z1 \cup Z2 \cup Z3$$
$$C4 = Z1 \cup Z2 \cup Z4$$
$$C5 = Z1 \cup Z2 \cup Z3 \cup Z4$$
$$C6 = Z1 \cup Z2 \cup Z3 \cup Z5$$
$$C7 = Z1 \cup Z2 \cup Z4 \cup Z6$$
$$C8 = Z1 \cup Z2 \cup Z3 \cup Z4 \cup Z5 \cup Z6$$
$$C9 = Z1 \cup \cdots\cdots \cup Z7$$
$$C10 = Z1 \cup \cdots\cdots \cup Z8$$

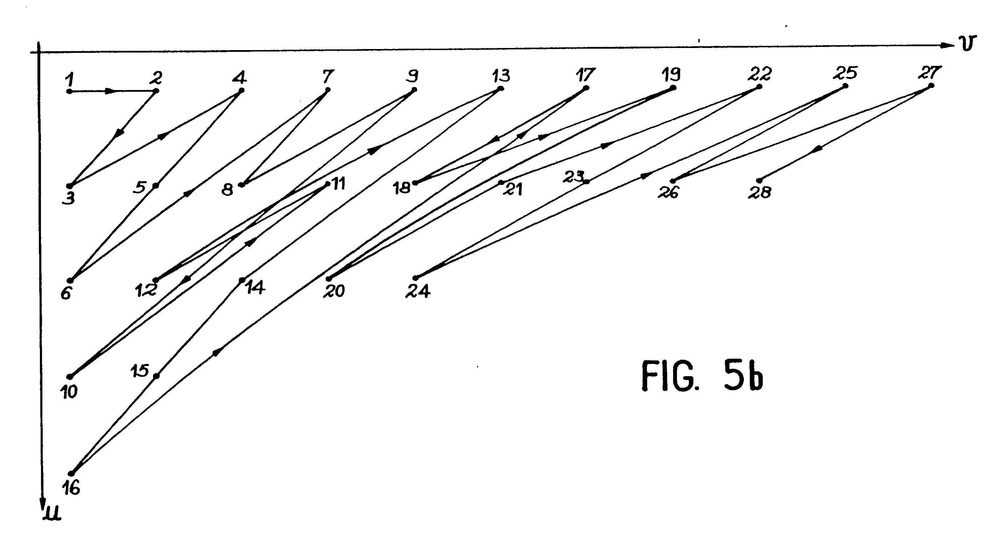

A titre d'exemples, on a représenté respectivement sur les figures 5a et 5b des balayages adaptés aux classes C3 et C10.

La classe C3 est la classe des blocs dont les coefficients pris en compte sont ceux qui correspondent aux indices 1, 2 et 3 dans la tableau II (l'indice i note la zone $Zi$; la classe C3 regroupe les zones Z1, Z2 et Z3). La balayage d'un bloc de la classe C3 est indiqué sur la figure 5a par une suite d'indices croissants. La suite produite par le balayage est ainsi: $X(0,0)$, $X(0,1)$, $X(1,0)$, $X(0,2)$, $X(1,1)$, $X(2,0)$, $X(0,3)$, $X(1,2)$, $X(0,4)$, $X(3,0)$,...

La classe C10 est la classe des blocs dont tous les coefficients sont pris en compte (à l'exception bien sûr des coefficients mis à zéro dans l'étape de quantification et qui correspondsnt à la valeur 0 dans les tableaux I et II). Pour cette classe, le balayage en zig-zag, utilisé classiquement pour tous les blocs dans l'art antérieur, est bien adapté. La balayage est indiquè sur la figure 5b par une suite d'indices croissants. La suite produite est: $X(0,0)$, $X(0,1)$, $X(1,0)$, $X(2,0)$, $X(1,1)$, $X(0,2)$, $X(0,3)$, $X(1,2)$,...

Pour déterminer la classe d'appartenance d'un bloc, on peut utiliser un algorithme fondé sur un critère de pseudo-énergie. On défini la pseudo-énergie du bloc $PE_b$ comme la somme des carrés des coefficients transformés quantifiés du bloc, hors la composante continue, c'est-à-dire:

$$PE_b = \underset{\substack{u \ v \\ (u,v) \neq (0,0)}}{\Sigma\Sigma} |X(u,v)|^2$$

# EP 0 247 075 B1

De même, la pseudo-énergie du bloc dans la classe j où $1 \leqslant j \leqslant 10$ est définie par

$$PE(j) = \Sigma\Sigma \ |X(u,v)|^2$$
$$(u,v) \ C_j$$
$$(u,v) \neq (0,0)$$

Le critère d'appartenance du bloc à une classe est que le rapport de la pseudo-énergie dans la classe à la pseudo-énergie totale du bloc soit supérieur à un seuil $E_s$, c'est-à-dire

$$PE(j) > PE_b \cdot E_s$$

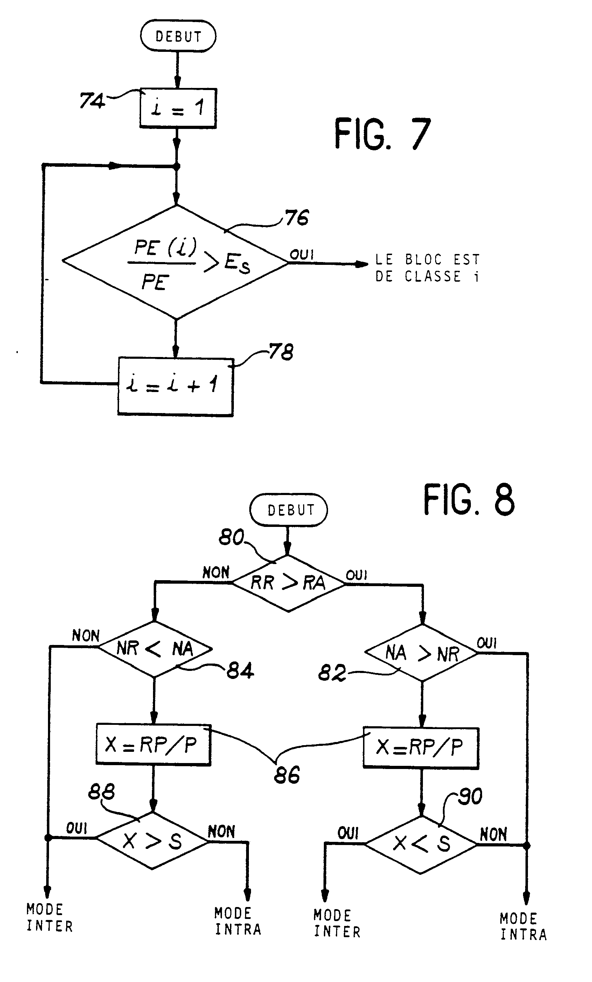

On a représenté schématiquement sur la figure 6 un circuit pour la détermination de la classe d'appartenance d'un bloc.

Ce circuit comprend un moyen 56 qui reçoit successivement chaque coefficient transformé du bloc, à l'exception de la composante continu $X(u,v)$. Ce moyen 56 calcule le carré de chaque coefficient reçu et délivré cette valeur à un registre 58. Un additionneur 60 associé à ce registre permet de mémoriser dans le registre 58 la somme des termes délivrés par le moyen 56. A la fin de chaque bloc, le registre 58 contient donc la pseudo-énergie du bloc $PE_b$.

Le circuit comprend également des registres $62_1,...,62_{10}$ à chacun desquels est associé un additionneur $64_1,...,64_{10}$. Chaque ensemble registre-additionneur est associé à une classe, et la mémorisation du carré du coefficient transformé délivré par le moyen 56 est conditionné, pour chaque registre, par une porte ET $66_1, ..., 66_{10}$ dont la validation est commandée par une mémoire morte 68 adressée par un signal représentatif des coordonnées u et v du coefficient traité par le moyen 56. Ainsi, chaque registre $62_1, ..., 62_{10}$ ne reçoit que les carrés des coefficients dont les coordonnées u, v coïncident avec la classe associée à ce registre. A la fin de chaque bloc, on a donc respectivement, et sortie de chacun des registres $62_1, ..., 62_{10}$, les pseudo-énergie $PE(1), ..., PE(10)$ du bloc dans chacune des classes.

Ces pseudo-énergies de classe sont appliquées sur des entrées d'une unité de décision 70 qui reçoit également le produit de la pseudo-énergie de bloc $PE_b$ délivrée par le registre 58 et multipliée par l'énergie de seuil $E_s$. Ce produit est réalisé par un multiplieur 72.

La détermination de la classe d'appartenance du bloc est réalisée par l'unité décision 70 suivant un algorithme dont un organigramme est représenté sur la figure 7. Cet algorithme consiste à comparer successivement la pseudo-énergie de chaque classe à la pseudo-énergie totale du bloc multipliée par l'énergie de seuil. Cet algorithme comprend une étape d'initialisation 74 pour initialiser la valeur de l'indice de boucle i à la valeur 1. L'étape suivante est un test 76 de comparaison de la pseudo-énergie $PE(i)$ au produit de la pseudo-énergie de bloc $PE_b$ multiplié par l'énergie de seuil $E_s$. Si la pseudo-énergie de classe est supérieure à ce produit, on décide que le bloc appartient à la classe i, et l'algorithme est terminé. Dans le cas contraire, on passe à une étape 78 d'incrémentation de l'indice i et on applique à nouveau le test 76 avec ce nouvel indice de classe.

Lorsque la classe d'appartenance du bloc a été déterminée, le bloc est balayé suivant le balayage associé à ce classe. La suite de coefficients obtenus par ce balayage est ensuite analysée pour déterminer sa longueur et la longueur du code produit par le codeur statistique pour coder cette suite. Cet analyse constitue l'étape de calcul du moyen de traitement.

Une autre méthode possible de détermination de la classe d'un bloc consiste à balayer ce bloc suivant un ensemble de balayage et à déterminer a posteriori le meilleur. Dans cette méthode, on procède pour chaque classe de la manière suivante: on balaie le bloc suivant le balayage associé à ladite classe pour produire une suite de coefficients et on détermine la longueur de la suite pour qu'elle contienne un pourcentage déterminé, par exemple 95%, de l'énergie du bloc. On compare ensuite les suites obtenues selon chaque balayage et on choisit la suite la plus courte. Cette suite est celle qui contient le moins de coefficients nuls.

Dans cette méthode, il est important de choisir un ensemble de balayages très différents pour qu'il soit possible, quel que soit le bloc balayé, de trouver une suite courte contenant la plupart de l'énergie du bloc.

A titre d'exemples, deux balayages très différents ont été représentés dans les tableaux III et IV. Chaque tableau est une matrice de $16 \times 16$ (taille d'un bloc) contenant tous les nombres de 1 à 256. Le balayage est réalisé dans l'ordre des nombres croissants du tableau.

Le tableau III correspond à un balayage sensiblement horizontal; il produit une courte suit de coefficients lorsque la portion d'image représentée par le bloc contient essentiellement des fréquences horizontales. Le tableau IV correspond à un balayage sensiblement diagonal; il produit une courte suite de coefficients lorsque la portion d'image représentée par le bloc est équilibrée en fréquences horizontales et verticales.

L'étape de balayage avec recherche de la classe d'appartenance du bloc et l'étape de calcul sont réalisées en parallèle par le moyen de traitement 38 sur le bloc transformé et par le moyen de traitement 42 sur la différence entre le bloc transformé et le bloc correspondant de la trame précédente. L'unité de décision 44 (figure 4) décide du mode de codage optimal en fonction du résultat des étapes de calcul des deux moyens de traitement. Un organigramme représentant l'algorithme de l'unité de décision est représenté sur la figure 8.

9

Les variables indiquées dans cet organigramme représentent:

NA: nombre de bits de la suite en mode intratrame

NR: nombre de bits de la suite en mode intertrame

RA: nombre de bits du code statistique de la suite en mode intratrame

RR: nombre de bits du code statistique de la suite en mode intertrame.

RP=RA−RR

P=NA−NR.

l'organigramme comprend:

un test 80 de comparaison entre RR et RA,

un test 82 de comparaison entre NR et NA; ce test est exécuté si RR⩽RA,

un test 84 de comparaison entre NA et NR; ce test est exécuté si RR>RA,

une étape de calcul 86 pour calculer une variable X égale à RP/P; cette étape est exécutée si NR⩾NA dans les tests 82 et 84,

un test 88 pour comparer X à un seuil S; ce test est exécuté après les étapes 84 et 86,

un test 90 pour comparer X au seuil S; ce test est exécuté après les étapes 82 et 86.

Le résultat de l'algorithme est un codage en mode intertrame si NR⩾NA dans le test 84, si X>S dans le test 88, ou si X⩽S dans le test 90. Dans les autres cas le bloc est codé en mode intratrame. Ce mode de codage est effectif si les variables NA et RA, ou NR et RR, suivant le codage retenu, sont respectivement inférieurs à deux variables Nmax et Rmax délivrées par l'unité logique de régulation 52 et dont les valeurs sont fixées dynamiquement en fonction du taux de remplissage du tampon 50.

Le mode de codage ayant été déterminé par l'unité de décision 44 (figure 4), la suite correspondant à ce mode est émise vers le codeur statistique 48. Les coefficients de cette suite sont codés avec un ensemble de mots de code à longueur variable calculée à partir de la statistique des amplitudes des coefficients pour chacun des nodes. Il faut noter que les points d'amplitude nulle, qui ne sont pas significatifs pour la reconstruction de l'image, sont cependant représentés par un mot de code. Le codeur 48 met en oeuvre un code statistique classique, tel que par exemple un code de Huffmann à longueur maximale limitée.

Ce codeur produit un débit binaire variable qu'il est nécessaire de réguler afin de pouvoir le transmettre sur une ligne de transmission à débit constant, par exemple de l'ordre de 64 kbit/s. La mémoire tampon 50 utilisée pour effectuer cette régulation permet également d'observer les périodes où l'image varie fortement d'une trame à l'autre. La régulation est nécessaire pour empêcher le contenu du tampon 50 de trop dériver par rapport à un taux de remplissage moyen. Ainsi il faut réduire le débit lorsque ce tampon est plein et au contraire permettre un codage de meilleure qualité si il se vide. Ce tampon a une taille de l'ordre de 20 kbits pour l'application choisi à titre d'exemple.

La régulation est assurée par l'unité logique de régulation 52. Cette unité délivre les paramètres de régulation suivants:

paramètre CRT appliqué au filtre temporel récursif du moyen de prétraitement,

paramètre $E_s$ d'énergie de seuil pour la détermination de la classe d'appartenance du bloc traité,

paramètre Nmax du nombre maximum de coefficients de la suite résultant du balayage de bloc,

paramètre Rmax du nombre maximum de bits affectés au codage du bloc,

paramètres TA et TD de seuil de décision de bloc fixe.

Le tableau V, joint en annexe, donne un exemple des valeurs de ces paramètres en fonction du taux de remplissage du tampon 50.

Les codes délivrés par ce tampon 50 sont multiplexés dans un multiplexeur 54 (figure 4) avec des codes de service émis par l'unité de décision 44 et les moyens de traitement 38, 42. Ces codes de service ne sont pas reçus dans le tampon 50. Cependant, ils sont pris en compte pour la régulation du remplissage du tampon car ils contribuent au débit sur la ligne de transmission. Le tableau VI, joint en annexe, illustre la structure de la trame émise par le multiplexeur 54 sur la ligne de transmission. Cette trame comporte, outre des informations de synchronisation et de gestion de la transmission (non représentées sur le tableau), un ensemble de codes de service suivi de codes statistiques. Les codes de service indiquent le mode de codage du bloc, la classe d'appartenance du bloc, dans le cas où plusieurs classes sont définies, et un nombre représentatif du dernier coefficient de la suite résultant du balayage du bloc.

Le mode de codage est représenté sur 2 bits pour indiquer soit un bloc fixe a priori, soit un bloc fixe a posteriori, soit un codage en mode intratrame, soit un codage en mode intertrame. Le nombre de bits utilisés pour désigner la classe dépend du nombre de classes qui sont définies. Le nombre Nsup indique le nombre de coefficients transmis de la suite résultant du balayage associé à la classe. Ce nombre peut être variable en fonction de la classe. Il a une longueur comprise, par exemple, entre 4 et 7 bits.

Le code statistique comprend un premier champ pour coder la composante continue du bloc et un deuxième champ pour coder les composantes alternatives. Le code de la composante continue a par exemple une longueur de 5 bits en mode intertrame et de 9 bits en mode intratrame.

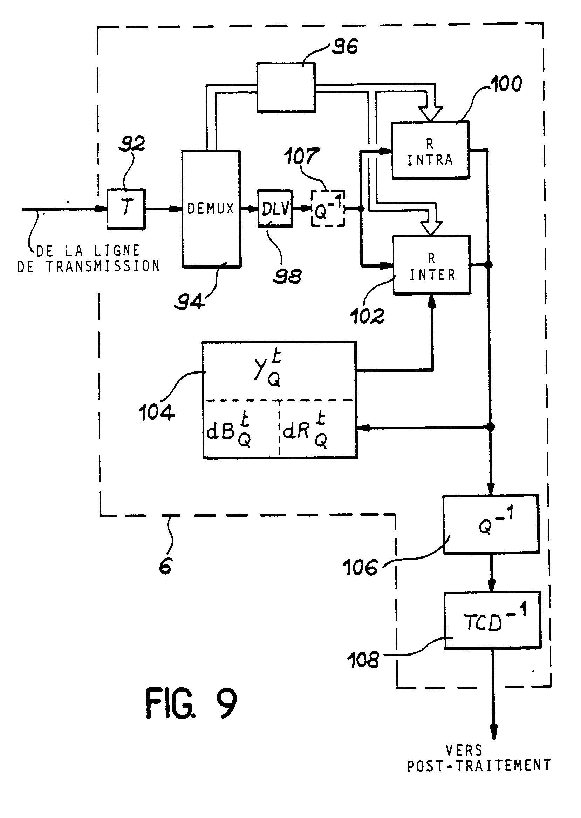

A la réception, la trame est reçue dans un décodeur comprenant des moyens pour réaliser les opérations inverses de celles effectuées dans le codeur. Un dessin schématique d'un tel décodeur a été représenté sur la figure 9.

Ce décodeur comprend en entrée un tampon 92 qui alimente un démultiplexeur 94. Ce dernier délivre d'une part les codes de service à une unité de commutation 96 et d'autre part les codes statistiques à un décodeur 98. La sortie de ce décodeur statistique 98 est reliée simultanément à l'entrée d'un moyen de

EP 0 247 075 B1

reconstruction en mode intratrame 100 et à l'entrée d'un moyen de reconstruction en mode intertrame 102. Ces moyens de reconstruction 100, 102 sont commandés par l'unité de commutation 96 en fonction du mode de codage du bloc traité.

Le moyen de reconstruction en mode intratrame reconstruit le bloc de coefficients transformés à partir de la suite de coefficients délivrés par le décodeur statistique 98. Le moyen de reconstruction en mode intertrame 102 reconstruit de même le bloc transformé en formant d'une part un bloc de différences à partir de la suite de coefficients délivrés par le décodeur statistique 98 et en sommant d'autre part ce bloc de différences et le bloc transformé correspondant à la trame précédente et mémorisé dans une mémoire de trame transformée 104.

Le bloc transformé reconstruit, soit par le moyen de reconstruction en mode intertrame 100, soit par le moyen de reconstruction en mode intertrame 102, est mémorisé dans la mémoire de trame transformée 104. Cette mémorisation n'est bien entendu pas effectuée si le code de service reçu par l'unité de commutation 96 indique que le bloc est fixe.

Les blocs transformés délivrés par les moyens de reconstructions 100, 102 sont appliqués sur l'entrée d'un moyen de quantification inverse 106 effectuant une quantification inverse de celle effectuée par le moyen de quantification 34 du codeur (figure 4). (Lorsque la quantification est effectuée dans le codeur par les moyens de quantification 36a et 36b, la quantification inverse est réalisée par un moyen de quantification inverse 107 qui suit immédiatement le décodeur statistique 98). Le bloc transformé délivré par ce moyen de quantification 106 est ensuite traité par un moyen de transformation inverse 108 pour ramener le bloc transformé du domaine fréquentiel au domaine spatial. La transformation effectuée est inverse de la transformation en cosinus directe réalisée par le moyen de transformation 32 du système de codage.

Les blocs délivrés par le décodeur 6 sont émis vers un moyen de post-traitement pour subir successivement un post-filtrage temporel, un sur-échantillonnage et une conversion numérique-analogique afin de restituer les signaux analogiques de luminance et de chrominance reçus par le moyen de prétraitement à l'émission.

TABLEAU I

| | | | | | | | | | | | | | | | → V |
|---|---|---|---|---|---|---|---|---|---|---|---|---|---|---|---|
| 9 | 7 | 7 | 6 | 6 | 6 | 6 | 6 | 5 | 5 | 5 | 5 | 4 | 4 | 4 | 3 |
| 7 | 7 | 6 | 6 | 6 | 6 | 5 | 5 | 5 | 5 | 4 | 4 | 4 | 3 | 3 | 3 |
| 7 | 6 | 6 | 6 | 5 | 5 | 5 | 5 | 4 | 4 | 4 | 3 | 3 | 3 | 2 | 2 |
| 6 | 6 | 5 | 5 | 5 | 4 | 4 | 4 | 3 | 3 | 3 | 2 | 2 | 2 | 1 | 1 |
| 6 | 5 | 5 | 5 | 4 | 4 | 4 | 3 | 2 | 2 | 1 | 1 | 0 | 0 | 0 | 0 |
| 6 | 5 | 4 | 3 | 3 | 3 | 2 | 2 | 1 | 1 | 0 | 0 | 0 | 0 | 0 | 0 |
| 5 | 4 | 3 | 3 | 2 | 2 | 1 | 1 | 0 | 0 | 0 | 0 | 0 | 0 | 0 | 0 |
| 5 | 4 | 3 | 3 | 2 | 2 | 1 | 0 | 0 | 0 | 0 | 0 | 0 | 0 | 0 | 0 |
| 5 | 4 | 3 | 2 | 1 | 1 | 0 | 0 | 0 | 0 | 0 | 0 | 0 | 0 | 0 | 0 |
| 4 | 3 | 2 | 1 | 1 | 0 | 0 | 0 | 0 | 0 | 0 | 0 | 0 | 0 | 0 | 0 |
| 4 | 3 | 2 | 1 | 1 | 0 | 0 | 0 | 0 | 0 | 0 | 0 | 0 | 0 | 0 | 0 |
| 4 | 3 | 2 | 1 | 0 | 0 | 0 | 0 | 0 | 0 | 0 | 0 | 0 | 0 | 0 | 0 |
| 4 | 2 | 1 | 0 | 0 | 0 | 0 | 0 | 0 | 0 | 0 | 0 | 0 | 0 | 0 | 0 |
| 3 | 2 | 1 | 0 | 0 | 0 | 0 | 0 | 0 | 0 | 0 | 0 | 0 | 0 | 0 | 0 |
| 3 | 1 | 0 | 0 | 0 | 0 | 0 | 0 | 0 | 0 | 0 | 0 | 0 | 0 | 0 | 0 |
| u ↓ 3 | 0 | 0 | 0 | 0 | 0 | 0 | 0 | 0 | 0 | 0 | 0 | 0 | 0 | 0 | 0 |

TABLEAU II

| | | | | | | | | | | | | | | | v |
|---|---|---|---|---|---|---|---|---|---|---|---|---|---|---|---|
| 1 | 1 | 1 | 2 | 2 | 2 | 3 | 3 | 3 | 3 | 3 | 5 | 5 | 5 | 5 | 5 |
| 1 | 1 | 2 | 2 | 3 | 3 | 3 | 3 | 3 | 5 | 5 | 5 | 5 | 5 | 7 | 7 |
| 1 | 2 | 2 | 3 | 3 | 5 | 5 | 5 | 5 | 5 | 7 | 7 | 7 | 7 | 8 | 8 |
| 2 | 2 | 4 | 6 | 7 | 7 | 7 | 7 | 7 | 7 | 8 | 8 | 8 | 8 | 8 | 8 |
| 2 | 4 | 6 | 7 | 7 | 7 | 7 | 7 | 8 | 8 | 8 | 8 | 0 | 0 | 0 | 0 |
| 4 | 4 | 6 | 7 | 7 | 7 | 7 | 8 | 8 | 8 | 0 | 0 | 0 | 0 | 0 | 0 |
| 4 | 4 | 6 | 7 | 7 | 7 | 8 | 8 | 0 | 0 | 0 | 0 | 0 | 0 | 0 | 0 |
| 4 | 6 | 7 | 7 | 8 | 8 | 8 | 0 | 0 | 0 | 0 | 0 | 0 | 0 | 0 | 0 |
| 4 | 6 | 7 | 7 | 8 | 8 | 0 | 0 | 0 | 0 | 0 | 0 | 0 | 0 | 0 | 0 |
| 4 | 6 | 7 | 8 | 8 | 0 | 0 | 0 | 0 | 0 | 0 | 0 | 0 | 0 | 0 | 0 |
| 6 | 6 | 7 | 8 | 8 | 0 | 0 | 0 | 0 | 0 | 0 | 0 | 0 | 0 | 0 | 0 |
| 6 | 6 | 7 | 8 | 0 | 0 | 0 | 0 | 0 | 0 | 0 | 0 | 0 | 0 | 0 | 0 |
| 6 | 7 | 8 | 0 | 0 | 0 | 0 | 0 | 0 | 0 | 0 | 0 | 0 | 0 | 0 | 0 |
| 6 | 8 | 8 | 0 | 0 | 0 | 0 | 0 | 0 | 0 | 0 | 0 | 0 | 0 | 0 | 0 |
| 6 | 8 | 0 | 0 | 0 | 0 | 0 | 0 | 0 | 0 | 0 | 0 | 0 | 0 | 0 | 0 |
| u 8 | 0 | 0 | 0 | 0 | 0 | 0 | 0 | 0 | 0 | 0 | 0 | 0 | 0 | 0 | 0 |

# EP 0 247 075 B1

## TABLEAU III

| 1 | 2 | 3 | 4 | 5 | 6 | 7 | 8 | 10 | 12 | 14 | 16 | 18 | 20 | 22 | 25 |
|---|---|---|---|---|---|---|---|---|---|---|---|---|---|---|---|
| 9 | 11 | 13 | 15 | 17 | 19 | 21 | 23 | 26 | 28 | 30 | 32 | 34 | 36 | 38 | 41 |
| 24 | 27 | 29 | 31 | 33 | 35 | 37 | 39 | 42 | 44 | 46 | 48 | 50 | 52 | 54 | 57 |
| 40 | 43 | 45 | 47 | 49 | 51 | 53 | 55 | 58 | 60 | 62 | 64 | 66 | 68 | 70 | 73 |
| 56 | 59 | 61 | 63 | 65 | 67 | 69 | 71 | 74 | 76 | 78 | 80 | 82 | 84 | 86 | 89 |
| 72 | 75 | 77 | 79 | 81 | 83 | 85 | 87 | 90 | 92 | 94 | 96 | 98 | 100 | 102 | 105 |
| 88 | 91 | 93 | 95 | 97 | 99 | 101 | 103 | 106 | 108 | 110 | 112 | 114 | 116 | 118 | 121 |
| 104 | 107 | 109 | 111 | 113 | 115 | 117 | 119 | 122 | 124 | 126 | 128 | 130 | 132 | 134 | 137 |
| 120 | 123 | 125 | 127 | 129 | 131 | 133 | 135 | 138 | 140 | 142 | 144 | 146 | 148 | 150 | 153 |
| 136 | 139 | 141 | 143 | 145 | 147 | 149 | 151 | 154 | 156 | 158 | 160 | 162 | 164 | 166 | 169 |
| 152 | 155 | 157 | 159 | 161 | 163 | 165 | 167 | 170 | 172 | 174 | 176 | 178 | 180 | 182 | 185 |
| 168 | 171 | 173 | 175 | 177 | 179 | 181 | 183 | 186 | 188 | 190 | 192 | 194 | 196 | 198 | 201 |
| 184 | 187 | 189 | 191 | 193 | 195 | 197 | 199 | 202 | 204 | 206 | 208 | 210 | 212 | 214 | 217 |
| 200 | 203 | 205 | 207 | 209 | 211 | 213 | 215 | 218 | 220 | 222 | 224 | 226 | 228 | 230 | 233 |
| 216 | 219 | 221 | 223 | 225 | 227 | 229 | 231 | 234 | 236 | 238 | 240 | 242 | 244 | 246 | 248 |
| 232 | 235 | 237 | 239 | 241 | 243 | 245 | 247 | 249 | 250 | 251 | 252 | 253 | 254 | 255 | 256 |

## TABLEAU IV

| 1 | 2 | 4 | 7 | 11 | 16 | 22 | 29 | 37 | 46 | 56 | 67 | 79 | 92 | 106 | 121 |
|---|---|---|---|---|---|---|---|---|---|---|---|---|---|---|---|
| 3 | 5 | 8 | 12 | 17 | 23 | 30 | 38 | 47 | 57 | 68 | 80 | 93 | 107 | 122 | 137 |
| 6 | 9 | 13 | 18 | 24 | 31 | 39 | 48 | 58 | 69 | 81 | 94 | 108 | 123 | 138 | 152 |
| 10 | 14 | 19 | 25 | 32 | 40 | 49 | 59 | 70 | 82 | 95 | 109 | 124 | 139 | 153 | 166 |
| 15 | 20 | 26 | 33 | 41 | 50 | 60 | 71 | 83 | 96 | 110 | 125 | 140 | 154 | 167 | 179 |
| 21 | 27 | 34 | 42 | 51 | 61 | 72 | 84 | 97 | 111 | 126 | 141 | 155 | 168 | 180 | 191 |
| 28 | 35 | 43 | 52 | 62 | 73 | 85 | 98 | 112 | 127 | 142 | 156 | 169 | 181 | 192 | 202 |
| 36 | 44 | 53 | 63 | 74 | 86 | 99 | 113 | 128 | 143 | 157 | 170 | 182 | 193 | 203 | 212 |
| 45 | 54 | 64 | 75 | 87 | 100 | 114 | 129 | 144 | 158 | 171 | 183 | 194 | 204 | 213 | 221 |
| 55 | 65 | 76 | 88 | 101 | 115 | 130 | 145 | 159 | 172 | 184 | 195 | 205 | 214 | 222 | 229 |
| 66 | 77 | 89 | 102 | 116 | 131 | 146 | 160 | 173 | 185 | 196 | 206 | 215 | 223 | 230 | 236 |
| 78 | 90 | 103 | 117 | 132 | 147 | 161 | 174 | 186 | 197 | 207 | 216 | 224 | 231 | 237 | 242 |
| 91 | 104 | 118 | 133 | 148 | 162 | 175 | 187 | 198 | 208 | 217 | 225 | 232 | 238 | 243 | 247 |
| 105 | 119 | 134 | 149 | 163 | 176 | 188 | 199 | 209 | 218 | 226 | 233 | 239 | 244 | 248 | 251 |
| 120 | 135 | 150 | 164 | 177 | 189 | 200 | 210 | 219 | 227 | 234 | 240 | 245 | 249 | 252 | 254 |
| 136 | 151 | 165 | 178 | 190 | 201 | 211 | 220 | 228 | 235 | 241 | 246 | 250 | 253 | 255 | 256 |

TABLEAU V

| Taux de remplissage de la memoire tampon (en%) | N.max | R.max | $E_s$ (%) | TA |
|---|---|---|---|---|
| 7,5 | 128 | 400 | 100 | 0 |
| 15 | 128 | 300 | 99,8 | 1 |
| 22,5 | 112 | 250 | 99,7 | 2 |
| 27,5 | 100 | 225 | 99,6 | 3 |
| 37,5 | 90 | 200 | 99,5 | 4 |
| 50 | 90 | 190 | 99,4 | 5 |
| 62,5 | 80 | 160 | 99,2 | 6 |
| 75 | 70 | 140 | 99 | 7 |
| 87,5 | 50 | 120 | 98,5 | 8 |
| 100 | 40 | 100 | 97 | 10 |

TABLEAU VI

| | CODES DE SERVICE | | CODE STATISTIQUE | |
|---|---|---|---|---|
| MODE | CLASSE | NSUP | Composante continue | Composantes alternatives |
| Mode | 00 | bloc fixe a priori | | |
| | 01 | bloc a posteriori | | |
| | 11 | codage en mode intratrame | | |
| | 10 | codage en mode intertrame | | |
| Classe | XXXX | numéro de classe | | |
| Nsup | YYYY | nombre de coefficients transmis de la suite (4 à 7 bits) | | |
| Composante continue | ZZZZZ | code de la composante continue code (5 bits en mode intertrame, 9 en mode intratrame) | | |
| Composantes alternatives | | code des composantes alternatives | | |

## Revendications

1. Procédé de codage hybride par transformation pour réduire le volume de données nécessaires pour représenter des images, dans lequel les images sont définies par une suite de trames, chaque trame contenant un ensemble de blocs organisés en matrice, chaque bloc contenant un ensemble de données numériques organisées en matrice et représentant une partie de l'image, ledit procédé étant caractérisé en ce qu'il comprend les étapes successives suivantes:

transformation de chaque bloc de données numériques en un bloc de coefficients transformés représentant ledit bloc dans le domaine fréquentiel,

quantification des coefficients transformés de chaque bloc pour obtenir des coefficients transformés quantifiés ayant chacun une valeur prise dans un ensemble limité de valeurs prédéterminées,

balayage de chaque bloc de coefficients transformés quantifiés pour produire une suite de coefficients transformés quantifiés et évaluation du volume de données nécessaires pour coder ladite suite par un codage statistique,

calcul d'un bloc de coefficients de différences par différence entre un bloc de coefficients transformés quantifiés et le bloc transformé quantifié correspondant de la trame précédente, balayage du bloc de

14

coefficients de différences pour produire une suite de coefficients de différences, et évaluation du volume de données nécessaires pour coder ladite suite de coefficients de différences par ledit codage statistique,

comparaison desdits volumes de données nécessaires pour coder un bloc, et décision du mode de codage en fonction desdits volumes de donnée et du volume maximal autorisé par le débit sur les lignes de transmission,

codage statistique du bloc, suivant le mode décidé, par ledit code statistique.

2. Procédé selon la revendication 1, caractérisé en ce qu'il comporte une étape supplémentaire de détection de mouvement, effectuée après l'étape de transformation, ladite étape de détection de mouvement consistant à comparer un bloc transformé de la trame courante avec le bloc transformé correspondant de la trame précédente et, dans le cas où ladite différence est inférieure à un seuil prédéterminé à émettre sur la ligne de transmission un code de non rafraîchissement du bloc.

3. Procédé selon la revendication 1, caractérisé en ce qu'il comporte une étape supplémentaire de détection de mouvement, effectuée après l'étape de quantification, ladite étape de détection de mouvement consistant à comparer un bloc transformé de la trame courante avec le bloc transformé correspondant de la trame précédente et, dans le cas où ladite différence est inférieure à un seuil prédéterminé à émettre sur la ligne de transmission un code de non rafraîchissement du bloc.

4. Procédé selon la revendication 1, caractérisé en ce que, pour chaque étape de balayage, on définit plusieurs classes de blocs correspondant chacune à une structure fréquentielle déterminée de bloc, on définit pour chaque classe, un balayage adapté à cette classe, et pendant chaque étape de balayage, on détermine la meilleure classe pour un bloc par un critère d'énergie du bloc et on balayage ledit bloc suivant le balayage associé à ladite meilleure classe.

5. Procédé selon la revendication 4, caractérisé en ce qu'on définit une partition des composantes du bloc en plusieurs zones et en ce que chaque classe est soit une zone, soit une réunion de plusieurs zones.

## Patentansprüche

1. Hybridkodierverfahren durch Umwandlung zur Reduktion von für die Bilddarstellung notwendigen Daten, bei dem die Bilder durch eine Folge von Einzelbildern gebildet werden, wobei jedes Einzelbild eine Anordnung von in einer Matrix organisierten Blöcken enthält, wobei jeder Block eine in Matrixform organisierte Anordnung von digitalen Daten enthält und einen Teil des Bildes darstellt, wobei dieses Verfahren dadurch gekennzeichnet ist, daß es die folgenden, sukzessiven Schritte aufweist:

Umwandlung jedes Blocks mit digitalen Daten in einen Block mit umgewandelten Koeffizienten, die diesen Block im Frequenzbereich darstellen;

Quantifizierung der umgewandelten Koeffizienten jedes Blocks, um umgewandelte, quantifizierte Koeffizienten zu erhalten, von denen jeder einen Wert aus einer begrenzten Gesamtheit von vorgegebenen Werten hat;

Abtasten jedes Blocks mit transformierten, quantifizierten Koeffizienten, um eine Folge von transformierten, quantifizierten Koeffizienten zu erhalten, und Berechnung des Datenvolumens, das notwendig ist, um diese Folge durch eine statistische Kodierung zu kodieren;

Berechnung eines Blocks mit Differenzwerten durch die Differenz eines Blocks mit transformierten, quantifizierten Koeffizienten und des entsprechenden transformierten, quantifizierten Blocks des vorhergehenden Einzelbildes, Abtasten des Blocks mit Differenzkoeffizienten, um eine Folge von Differenzkoeffizienten zu erzeugen, und Berechnung des Datenvolumens, das notwendig ist, um diese Folge von Differenzkoeffizienten durch statische Kodierung zu kodieren;

Vergleich dieser Datenvolumen, die notwendig sind, um einen Block zu kodieren, und Bestimmung des Kodiermodus in Abhängigkeit von den Datenvolumen und dem maximal durch die Übertragungsleistung der Übertragungsleitungen ermöglichen Volumen;

statistische Kodierung des Blocks entsprechend dem festgelegten Modus, durch den statistischen Kode.

2. Verfahren nach Anspruch 1, dadurch gekennzeichnet, daß es einen zusätzlichen Schritt zur Bewegungsdetektion umfaßt, der nach dem Transformationsschritt durchgeführt wird, wobei dieser Schritt zur Bewegungsdetektion darin besteht, einen transformierten Block des augenblicklichen Einzelbildes mit dem entsprechenden transformierten Block des vorhergehenden Einzelbildes zu vergleichen und für den Fall, daß die Differenz kleiner ist als eine vorgegebene Schwelle, auf der Übertragungsleitung einen Kode für die Nicht-Erneuerung des Blocks zu senden.

3. Verfahren nach Anspruch 1, dadurch gekennzeichnet, daß es einen zusätzlich Schritt zur Bewegungsdetektion umfaßt, der nach dem Quantifikationsschritt durchgeführt wird, wobei dieser Schritt zur Bewegungsdetektion darin besteht, einen transformierten Block des augenblicklichen Einzelbildes mit dem entsprechenden transformierten Block des vorhergehenden Einzelbildes zu vergleichen und für den Fall, daß die Differenz kleiner ist als eine vorgegebene Schwelle, auf der Übertragungsleitung einen Kode für die Nicht-Erneuerung des Blocks zu senden.

4. Verfahren nach Anspruch 1, dadurch gekennzeichnet, daß man für jeden Abtastschritt mehrere Klassen von Blöcken bildet, die jeweils einer bestimmten Blockfrequenzstruktur entsprechen, daß man für jede Klasse eine für diese Klasse geeignete Abtastung bildet und daß man während jedes Abtastschritts die beste Klasse für einen Block durch ein Energiekriterium des Blocks bestimmt und man den Block entsprechend der mit der besten Klasse verbundenen Abtastung abtastet.

5. Verfahren nach Anspruch 4, dadurch gekennzeichnet, daß man eine Aufteilung der Bestandteile eines Blocks in mehrere Zonen bilden und daß jede Klasse entweder eine Zone oder eine Verbindung mehrerer Zonen ist.

**Claims**

1. Process for hybrid coding by transformation for reducing the data volume necessary for representing pictures, in which the pictures are defined by a sequence of frames, each frame containing a set of matrix-organized blocks, each block containing a set of matrix-organized digital data representing part of the picture, characterized in that the process involves the transformation of each digital data block into a block of transformed coefficients representing said block in the frequency range, quantifying the transformed coefficients of each block to obtain quantified transformed coefficients, each having a value taken from a limited set of predetermined values, scanning each block of quantified transformed coefficients to produce a sequence of quantified transformed coefficients and evaluating the data volume necessary for coding said sequence by statistical coding, calculating a block of difference coefficients by a difference between a block of quantified transformed coefficients and the corresponding block of the preceding frame, scanning the block of difference coefficients for producing a sequence of difference coefficients and evaluating the data volume necessary for coding said sequence of difference coefficients by said statistical coding, comparison of the data volumes necessary for coding a block and deciding on the coding mode as a function of said data volumes and the maximum volume authorized by the rate on the transmission lines and statistical coding of the block, in accordance with the decided mode, by said statistical code.

2. Process according to Claim 2, characterized in that it comprises a supplementary movement detection stage performed after the transformation stage, said movement detection stage consisting of comparing a transformed block of the current frame with the corresponding transformed block of the preceding frame and, in the case where said difference is below a predetermined threshold, transmitting on the transmission line a non-refreshing code for the block.

3. Process according to Claim 1, characterized in that it comprises a supplementary movement detection stage, performed after the quantification stage, said movement detection stage consisting of comparing the transformed block of the current frame with the corresponding transformed block of the preceding frame, and in the case where said difference is below a predetermined threshold, transmitting on the transmission line a non-refreshing code for the block.

4. Process according to Claim 2, characterized in that, for each scanning stage, several classes of blocks each corresponding to a given block frequency structure is defined, for each class is defined a scan adapted to said class and during each scanning stage, the best class for a block is determined by an energy criterion of the block and said block is scanned in accordance with the scan associated with said best class.

5. Process according to Claim 4, characterized in that a definition takes place of a partition of the components of the block into several zones and in that each class is either a zone, or a combination of several zones.

CRT

2

PRETRAITEMENT → CODEUR → 10

## FIG. 1

6 DECODEUR

8 POST-TRAITEMENT

## FIG. 3

CRT

$x(t)$ → $-$ → PROM $a(x-y)$ → 31 → $+$ → $y(t)$

$+$

$+$

$y(t-1)$ → RAM → 33

0 1 2 3 ·—·—·—·—·—· 15 → $v$

0
1
2
3

15 ↓ $\mu$

## FIG. 5a

FIG. 2

FIG. 4

FIG. 6

FIG. 5b

FIG. 7

FIG. 8

FIG. 9